# EUROPEAN PATENT SPECIFICATION

(11) **EP 2 540 799 B1**
(45) Date of publication and mention of the grant of the patent: **25.11.2015**
(21) Application number: 10846344.9
(22) Date of filing: 26.02.2010
(51) Int. Cl.: C09K 11/78

(54) **GREEN LUMINESCENT MATERIAL OF TERBIUIM DOPED GADOLINIUM BORATE AND PREPARING METHOD THEREOF**
GRÜNES LUMINESZENZMATERIAL VON TERBIUMDOTIERTEM GADOLINIUMBORAT UND HERSTELLUNGSVERFAHREN DAFÜR
MATIÈRE LUMINESCENTE VERTE À BASE DE BORATE DE GADOLINIUM DOPÉ AU TERBIUM ET PROCÉDÉ DE PRÉPARATION ASSOCIÉ

(43) Date of publication of application: 02.01.2013
(73) Proprietor: Ocean's King Lighting Science & Technology Co., Ltd., Guangdong 518054 (CN)
(72) Inventor: ZHOU, Mingjie, Guangdong 518054 (CN); LIANG, Xiaofang, Guangdong 518054 (CN); LIU, Jun, Guangdong 518054 (CN); LIAO, Qiurong, Guangdong 518054 (CN)
(74) Representative: Johnson, Richard Alan
(86) International application number: PCT/CN2010/070776
(87) International publication number: WO 2011/103721

(56) References cited:
- CN-A- 1 640 984
- US-A- 4 926 091
- US-A- 6 090 310
- US-A1- 2005 230 689
- LU ET AL: "Exploration of crystal growth and giant faraday rotation of terbium doped Sr3Gd(BO3)3", THE PAPER COLLECTION OF THE 15TH ACADEMIC CONFERENCE ON CRYSTAL GROWTH AND MATERIALS, CN, 31 December 2009 (2009-12-31), page 144, XP008168270,
- LU, JUNYE ET AL.: 'Exploration of crystal growth and giant faraday rotation of terbium doped Sr3Gd(BO3)3' THE PAPER COLLECTION OF THE 15TH ACADEMIC CONFERENCE ON CRYSTAL GROWTH AND MATERIALS 2009, page 144, XP008168675
- LIANG HONGBIN ET AL.: 'The VUV-vis spectroscopic properties of phosphors Ca3Gd2(1-X)Ln2X(BO3)4(Ln3+=Ce,Sm,Eu,Tb)' MATERIALS RESEARCH BULLETIN vol. 41, 2006, pages 1468 - 1475, XP008168682

## Description

### FIELD OF THE INVENTION

The present disclosure relates to luminescent materials, especially to a terbium doped gadolinium borate based green luminescent material which can be excited by vacuum ultraviolet light and a preparation method for preparing the material.

### BACKGROUND OF THE INVENTION

Compared to the CRT display and the LCD display, the plasma panel display (PDP) has a lot of outstanding features, such as, broad angular field of view, large areas, high speed of response, and colors non-distortion. The PDP is now widely used to produce large size displays of wall type TVs. Mercury-free fluorescence lamps are much more environmental friendly than the common high-voltage mercury lamps and low-voltage mercury lamps. In a PDP display, the circuit and luminescent material therein, especially the luminescent material, may be the most important technique for displaying. Accordingly, tricolor fluorescence powders used as luminescent materials in the PDP become very important. Recently, the most widely used tricolor fluorescence powders may be red powders such as Y₂O₃:Eu³⁺ and (Y,Gd)BO₃:Eu³⁺, green powders such as Zn₂SiO₄:Mn²⁺ and BaAl₁₂O₁₉:Mn²⁺, and blue powders such as BaMgAl₁₀O₁₇:Eu²⁺. For the commercial green powder Zn₂SiO₄:Mn²⁺, the Mn²⁺ therein has a spin forbidden (⁴T₁→ ⁶A₁) emission, which prolongs the afterglow time of the material and negatively affects the display of rapidly moving images of TVs. The afterglow time may be shortened by increasing a doping of the Mn²⁺. However, an increasing doping of the Mn²⁺ will weak the luminescence intensity of the material. Now a luminescent material based of gadolinium borate M₃Gd(BO₃)₃ (M=Ca, Sr, Ba) is mainly researched for its laser characteristics when being doped in rare earth elements as a mono-crystal. In contrast, the luminescent material based of gadolinium borate M₃Gd(BO₃)₃ is less researched for its vacuum ultraviolet exciting characteristics. Compared to the Mn²⁺, the Tb³⁺ has a shorter afterglow time for Tb³⁺ can emit green light (540-545 nm) and the spin coupling of the Tb³⁺ has a shielding affect to the spin forbidden of the Tb³⁺, which overcomes hysteresis effect. US 4,926,091 describes luminescent terbium-activated alkaline earth metal rare earth metal borate having a monoclinic crystal structure and being defined by the formula M₃Ln₁₋ₓTbₓ(BO₃)₃ where M is at least one element of Ba, Sr and Ca, Ln is at least one of the elements of Gd, Y and Sc and 0.005 ≤ x ≤ 1. Lu et al., The Paper Collection of the 15th Academic Conference on Crystal Growth and Materials, CN, 31 December 2009, page 144, describes studies on Tb³⁺ doped Sr₃Gd(BO₃)₃ crystal raw materials.

Accordingly, to overcome the disadvantage of long afterglow time, and to meet the requirement of color displaying and green illumination, a new green luminescent material which has a short afterglow time should be developed to be applied in plasma panel display (PDP) or mercury-free fluorescence lamps.

### SUMMARY OF THE INVENTION

The technical problem of the present invention to be solved is to provide a terbium doped gadolinium borate based green luminescent material which has high luminescence intensity, and a preparation method for preparing the terbium doped gadolinium borate based green luminescent material.

The technical solution to solve the technical problem is: providing a terbium doped gadolinium borate based green luminescent material, the terbium doped gadolinium borate based green luminescent material has a chemical formula of M₃Gd₁₋ₓTbₓ(BO₃)₃, wherein, M is alkaline earth metal element, and x is in a range of 0.005 - 0.5. The said alkaline earth metal element M is at least one of calcium (Ca), strontium (Sr), and barium (Ba).

And, the present invention provides a preparation method for preparing the terbium doped gadolinium borate based green luminescent material comprises the following steps:
Step one, selecting the source compounds of alkaline earth metal ion, boric acid radical ion (BO₃²⁻), Gd³⁺, and Tb³⁺ by the stoichiometric ratio, wherein, the stoichiometric ratio is the molar ratio of the corresponding element in the formula of M₃Gd₁₋ₓTbₓ(BO₃)₃, and the source compound of BO₃²⁻ is provided in 10% to 30% by mole in excess of the amount required for the formula M₃Gd₁₋ₓTbₓ(BO₃)₃ ; M is alkaline earth metal element, and x is in a range of 0.005-0.5;
Step two, mixing the compounds with barium fluoride as fluxing agent to get a mixture;
Step three, pre-sintering the mixture and then cooling the mixture to get a pre-sintered matter;
Step four, grinding the pre-sintered matter, calcining the grinded matter in reducing atmosphere and then cooling to get the terbium doped gadolinium borate based green luminescent material.

In the preparation method of the present invention, the source compound of the alkaline earth metal element is at least one of alkaline earth oxide, alkaline earth hydroxide, alkaline earth nitrate, and alkaline earth carbonate. The source compound of the boric acid radical ion is at least one of boric acid and boric oxide. The source compound of Gd³⁺ is Gd³⁺ contained rare earth oxide or Gd³⁺ contained nitrate. The source compound of Tb³⁺ is Tb³⁺ contained rare earth oxide or Tb³⁺ contained nitrate.

In the preparation method of the present invention, the compounds are mixed with fluxing agents.

In the preparation method of the present invention, pre-sintering the mixture is carried out at the temperature in a range of 200 °C to 700 °C for 2 hours to 7 hours.

In the preparation method of the present invention, calcining the grinded matter is carried out at the temperature in a range of 900 °C to 1100 °C for 3 hours to 24 hours.

In the preparation method of the present invention, the source compound of boric acid radical ion is provided in 10% to 20% by mole in excess of the amount required for the formula M₃Gd₁₋ₓTbₓ(BO₃)₃.

In the preparation method of the present invention, the reducing atmosphere is mixture of N₂ and H₂, H₂, or carbon monoxide.

The luminescent material of the present invention has a matrix of M₃Gd₁₋ₓTbₓ(BO₃)₃. The M₃Gd₁₋ₓTbₓ(BO₃)₃ has a strong absorption of the 150 nm - 175 nm vacuum ultraviolet light (VUV), and transits the energy to the Gd ions, for there is energy transition between the Gd^{3+ 6}P_{J} energy levels and the Tb³⁺, when the Tb³⁺ absorbs energy, by f-f transition radiation, emits green photons, the energy transition process between the Gd^{3+ 6}P_{J} energy levels and the Tb³⁺ enhances the green light emitting intensity of the Tb³⁺. Compared to the existing technology, the luminescent materials of the present invention have the following advantages: 1. Gd³⁺ contained in the gadolinium borate M₃Gd(BO₃)₃ (M=Ca, Sr, Ba) is a framework structure of the M₃Gd(BO₃)₃. there is energy transition between the Gd³⁺ and the Tb³⁺, which can improve the green light emitting intensity of the Tb³⁺; 2. compared to the Mn²⁺ having long afterglow time, the Tb³⁺ has characteristic green light emitting (540-545 nm), and the spin coupling of the Tb³⁺ has a shielding affect to the spin forbidden of the Tb³⁺, thus the Tb³⁺ has shorter afterglow times, overcoming the hysteresis effect.

In the preparation method for preparing the terbium doped gadolinium borate based green luminescent materials, by pre-sintering treatment and calcining treatment, the luminescent materials can be obtained, which makes the process be simple, low cost, and has broad producing and applying prospect.

### BRIEF DESCRIPTION OF THE DRAWINGS

Further description of the present invention will be illustrated, which combined with drawings and embodiments in the drawings.
Fig.1 shows an excitation spectrum of the luminescent material of Sr₃Gd_{0.85}Tb_{0.15}(BO₃)₃ of example 1, the excitation spectrum is tested under a monitoring wavelength of 543 nm;
Fig. 2 shows emission spectrums of the luminescent material of Sr₃Gd_{0.85}Tb_{0.15}(BO₃)₃ of example 1 and a commercial BaAl₁₂O₁₉:Mn²⁺, the emission spectrums are tested under an excitation wavelength of 172 nm;
Fig. 3 shows emission spectrums of the luminescent material of Sr₃Gd_{0.85}Tb_{0.15}(BO₃)₃ of example 1 and the luminescent material of Sr₃Y_{0.85}Tb_{0.15}(BO₃)₃ of comparison example 1, the emission spectrums are tested under an excitation wavelength of 172 nm;
Fig. 4 shows a flow chat for preparing the terbium doped gadolinium borate based green luminescent material.

### DETAILED DESCRIPTION OF ILLUSTRATED EMBODIMENTS

The examples hereinafter described merely being preferred or exemplary embodiment of the disclosure. It will be apparent that various changes may be made thereto without departing from scope of the disclosure.

According to an embodiment of a terbium doped gadolinium borate based green luminescent material, the terbium doped gadolinium borate based green luminescent material has a chemical formula of M₃Gd₁₋ₓTbₓ(BO₃)₃, wherein, M is alkaline earth metal element, and x is 0.005-0.5.

M₃Gd(BO₃)₃ is the matrix of the terbium doped gadolinium borate based green luminescent material. When luminescence ions of Tb³⁺ are doped to the M₃Gd(BO₃)₃, the luminescence mechanism is: by the strong absorptions of the matrix M₃Gd₁₋ₓTbₓ(BO₃)₃ to the 150 nm - 175 nm vacuum ultraviolet light (VUV), and transiting the energy to the Gd³⁺ ions, for there is energy transition between the Gd^{3+ 6}P_{J} energy levels and the Tb³⁺, when the Tb³⁺ absorbs energy, by f-f transition radiation, emits green photons, the energy transition process between the Gd^{3+ 6}P_{J} energy levels and the Tb³⁺ enhances the green light emitting intensity of the Tb³⁺.

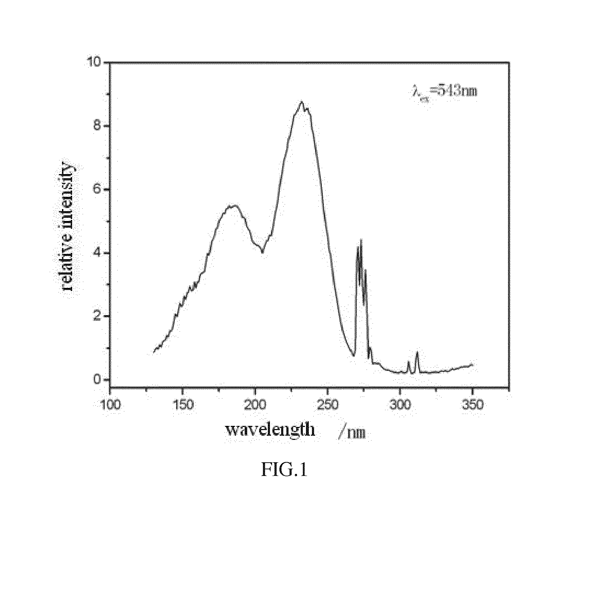

Referring to Fig. 1, the strong absorption peak at the vacuum ultraviolet wave band of 150 - 200 nm is an absorption peak of the matrix. The luminescent material of example 1 has a strong absorption at the vacuum ultraviolet wave band, which can effectively transit the energy to the Gd³⁺, achieve an energy transition between Gd-Tb, and enhance the characteristic emission intensity of the Tb³⁺ at 543 nm.

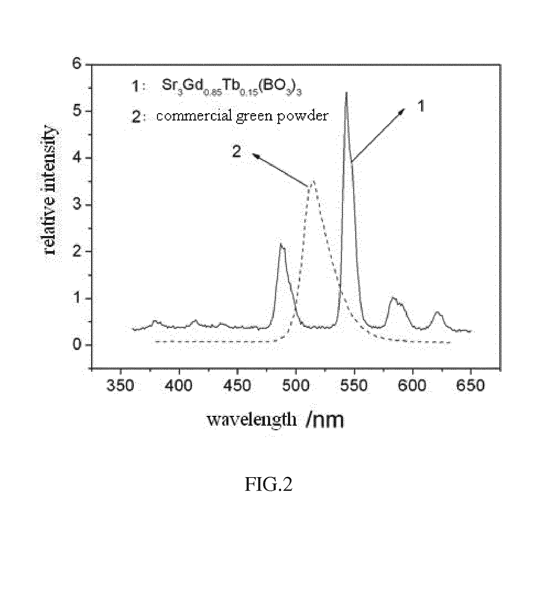

Referring to Fig. 2, the curve 1 shows an emission spectrum of Sr₃Gd_{0.85}Tb_{0.15}(BO₃)₃ under an exciting wavelength of 172 nm, the curve 2 shows an emission spectrum of commercial green powder BaAl₁₂O₁₉:Mn²⁺ under an exciting wavelength of 172 nm. Obviously, the intensity of the emission peak of the Sr₃Gd_{0.85}Tb_{0.15}(BO₃)₃ at 543 nm is greater than the intensity of the emission peak of the commercial green powder BaAl₁₂O₁₉:Mn²⁺ at 525 nm. The intensity of the emission peak of the Sr₃Gd_{0.85}Tb_{0.15}(BO₃)₃ of example 1 at 543 nm is 1.8 times to that of the commercial powder BaAl₁₂O₁₉:Mn²⁺. The luminescent material of example 1 has a high effect, and a short afterglow time, which overcomes hysteresis effect. The Tb³⁺ doped in the gadolinium borate green luminescent material at least has the following advantages: (1) Gd³⁺ contained in the gadolinium borate M₃Gd(BO₃)₃ (M=Ca, Sr, Ba) is a framework structure of the M₃Gd(BO₃)₃, there is energy transition between the Gd³⁺ - Tb³⁺, which can improve the green light emitting intensity of the Tb³⁺; (2) compared to the Mn²⁺ having long afterglow time, the Tb³⁺ has characteristic green light emitting (540-545 nm), and the spin coupling of the Tb³⁺ has a shielding affect to the spin forbidden of the Tb³⁺, thus the Tb³⁺ has shorter afterglow times, overcoming the hysteresis effect.

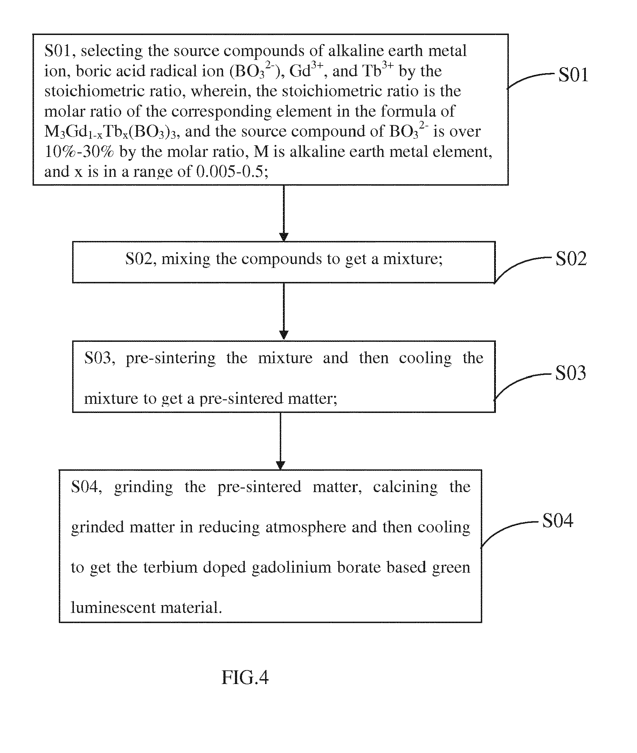

Referring to Fig. 4, a flow chart of a preparation method for preparing the terbium doped gadolinium borate based green luminescent material includes the following steps:
S01, selecting the source compounds of alkaline earth metal ion, boric acid radical ion (BO₃²⁻), Gd³⁺, and Tb³⁺ by the stoichiometric ratio, wherein, the stoichiometric ratio is the molar ratio of the corresponding element in the formula of M₃Gd₁₋ₓTbₓ(BO₃)₃, and the source compound of BO₃²⁻ is provided in 10% to 30% by molo in excess of the amount required for the formula M₃Gd₁₋ₓTbₓ(BO₃)₃, preferably, the source compound of B₃²⁻ is provided in 10% to 20% by mole in excess of the amount required for the formula M₃Gd₁₋ₓTbₓ(BO₃)₃, M is alkaline earth metal element, the alkaline earth metal element M is at least one of the Ca, Sr, and Ba, and x is in a range of 0.005-0.5;
S02, mixing the compounds witl fluxing agent to get a mixture;
S03, pre-sintering the mixture and then cooling the mixture to get a pre-sintered matter;
S04, grinding the pre-sintered matter, calcining the grinded matter in reducing atmosphere and then cooling to get the terbium doped gadolinium borate based green luminescent material.

In the step of S01, the source compound of the alkaline earth metal element is at least one of alkaline earth oxide, alkaline earth hydroxide, alkaline earth nitrate, and alkaline earth carbonate. The source compound of the boric acid radical ion is at least one of boric acid and boric oxide. The source compound of Gd³⁺ is Gd³⁺ contained rare earth oxide or Gd³⁺ contained nitrate. The source compound of Tb³⁺ is Tb³⁺ contained rare earth oxide or Tb³⁺ contained nitrate.

In the step of S02, the compounds are even mixed with a little fluxing agent, the fluxing agent is one or two elements selected from the group consisting of boric acid and barium fluoride.

In the step of S03, pre-sintering the mixture is carried out at the temperature in a range of 200 °C to 700 °C for 2 hours to 7 hours, then cooled to room temperature.

In the step of S04, calcining the grinded matter is carried out at the temperature in a range of 900 °C to 1100 °C for 3 hours to 24 hours in a box type high temperature furnace, then cooled to room temperature. The reducing atmosphere is mixture gases of N₂ and H₂, H₂, or carbon monoxide.

Special examples are disclosed as follows to demonstrate the terbium doped gadolinium borate based green luminescent material and preparation method for preparing the gadolinium borate based green luminescent material.

### EXAMPLE 1

2.2145 gram (g) strontium carbonate (SrCO₃), 0.7703 g gadolinium oxide (Gd₂O₃), 1.0666 g boric acid (H₃BO₃) (calculated by over 15% of the molar equivalence of the boron element contained in the products. The follows have the same calculation), 0.1402 g terbium oxide (Tb₄O₇), and 0.0438 g barium fluoride (BaF₂) (weigh by 5% of the molar ratio to the products, the follows are the same) are provided and positioned in an agate mortar to be completely grinded. The grinded matter is pre-sintered in a corundum crucible at 500 °C for 2 hours (h), and then cooled to room temperature. The cooled pre-sintered matter is completely grinded once more. Finally, calcining at 1000 °C for 5 h in mixture gases of N₂ and H₂ (H₂ takes 5%), cooling, removing to be grinded to obtain green fluorescent luminescent material of Sr₃Gd_{0.85}Tb_{0.15}(BO₃)₃. In the present preparation method, barium fluoride acts as a fluxing agent, which cannot enter in the crystal lattice, and do not affect the structure and compositions of the final product Sr₃Gd_{0.85}Tb_{0.15}(BO₃)₃ green fluorescent luminescent materials.

### EXAMPLE 2

3.9201 g barium nitrate (Ba(NO₃)), 0.9017 g gadolinium oxide (Gd₂O₃), 1.2057 g boric acid (H₃BO₃) (over 15%), 0.0047 g terbium oxide (Tb₄O₇), and 0.0438 g barium fluoride (BaF₂) (5%) are provided and positioned in an agate mortar to be completely grinded. The grinded matter is pre-sintered in a corundum crucible at 200 °C for 2 h, and then cooled to room temperature. The cooled pre-sintered matter is completely grinded once more. Finally, calcining at 900 °C for 5 h in mixture gases of N₂ and H₂ (H₂ takes 5%), cooling, removing to be grinded to obtain green fluorescent luminescent material of Ba₃Gd_{0.995}Tb_{0.005}(BO₃)₃.

### EXAMPLE 3

2.9600 g barium carbonate (BaCO₃), 2.1434 g gadolinium nitrate Gd(NO₃)₃·6H₂O, 1.0202 g boric acid (H₃BO₃) (over 10%), 0.0467 g terbium oxide (Tb₄O₇), and 0.0438 g barium fluoride (BaF₂) (5%) are provided and positioned in an agate mortar to be completely grinded. The grinded matter is pre-sintered in a corundum crucible at 700 °C for 2 h, and then cooled to room temperature. The cooled pre-sintered matter is completely grinded once more. Finally, calcining at 1100 °C for 10 h in reducing gas of CO, cooling, removing to be grinded to obtain green fluorescent luminescent material of Ba₃Gd_{0.95}Tb_{0.05}(BO₃)₃.

### EXAMPLE 4

1.1114 g calcium hydroxide (Ca(OH)₂), 0.6344 g gadolinium oxide (Gd₂O₃), 1.0202 g boric acid (H₃BO₃) (over 10%), and 0.2804 g terbium oxide (Tb₄O₇) are provided and positioned in an agate mortar to be completely grinded. The grinded matter is pre-sintered in a corundum crucible at 600 °C for 2 h, and then cooled to room temperature. The cooled pre-sintered matter is completely grinded once more. Finally, calcining at 1000 °C for 24 h in reducing gas of CO, cooling, removing to be grinded to obtain green fluorescent luminescent material of Ca₃Gd_{0.7}Tb_{0.3}(BO₃)₃.

### EXAMPLE 5

2.1407 g strontium carbonate (SrCO₃), 0.0370 g calcium hydroxide (Ca(OH)₂), 0.7703 g gadolinium oxide (Gd₂O₃), 1.0202 g boric acid (H₃BO₃) (over 10%), 0.1402 g terbium oxide (Tb₄O₇), and 0.0438g barium fluoride (BaF₂) (5%) are provided and positioned in an agate mortar to be completely grinded. The grinded matter is pre-sintered in a corundum crucible at 700 °C for 2 h, and then cooled to room temperature. The cooled pre-sintered matter is completely grinded once more. Finally, calcining at 1000 °C for 12 h in mixture gases of N₂ and H₂ (H₂ takes 5%), cooling, removing to be grinded to obtain green fluorescent luminescent material of Sr_{2.9}Ca_{0.1}Gd_{0.85}Tb_{0.15}(BO₃)₃.

### EXAMPLE 6

2.0669 g strontium carbonate (SrCO₃), 0.0370 g calcium hydroxide (Ca(OH)₂), 0.0987 g barium carbonate (BaCO₃), 0.4531 g gadolinium oxide (Gd₂O₃), 1.0666 g boric acid (H₃BO₃) (over 15%), 0.4673 g terbium oxide (Tb₄O₇), and 0.0438g barium fluoride (BaF₂) (5%) are provided and positioned in an agate mortar to be completely grinded. The grinded matter is pre-sintered in a corundum crucible at 700 °C for 2 h, and then cooled to room temperature. The cooled pre-sintered matter is completely grinded once more. Finally, calcining at 1000 °C for 24 h in reducing gas of H₂. cooling, removing to be grinded to obtain green fluorescent luminescent material of Sr_{2.8}Ca_{0.1}Ba_{0.1}Gd_{0.5}Tb_{0.5}(BO₃)₃.

### COMPARISON EXAMPLE 1

2.2145 g strontium carbonate (SrCO₃), 0.4795 g yttrium oxide (Y₂O₃), 1.0666 g boric acid (H₃BO₃) (over 15%), 0.1402 g terbium oxide (Tb₄O₇), and 0.0438g barium fluoride (BaF₂) (5%) are provided and positioned in an agate mortar to be completely grinded. The grinded matter is pre-sintered in a corundum crucible at 500 °C for 2 h, and then cooled to room temperature. The cooled pre-sintered matter is completely grinded once more. Finally, calcining at 1000 °C for 5 h in reducing gases of N₂ and H₂ (H₂ takes 5%), cooling, removing to be grinded to obtain green fluorescent luminescent material of Sr₃Y_{0.85}Tb_{0.15}(BO₃)₃.

### COMPARISON EXAMPLE 2

1.5013 g barium carbonate (BaCO₃), 0.7738 g lanthanum oxide (La₂O₃), 1.0202 g boric acid (H₃BO₃) (over 10%), 0.0467 g terbium oxide (Tb₄O₇), and 0.0438g barium fluoride (BaF₂) (5%) are provided and positioned in an agate mortar to be completely grinded. The grinded matter is pre-sintered in a corundum crucible at 500 °C for 2 h, and then cooled to room temperature. The cooled pre-sintered matter is completely grinded once more. Finally, calcining at 1100 °C for 5 h in reducing gas of CO, cooling, removing to be grinded to obtain green fluorescent luminescent material of Ba₃La_{0.95}Tb_{0.05}(BO₃)₃.

### COMPARISON EXAMPLE 3

1.5013 g calcium carbonate (CaCO₃), 0.7250 g gadolinium oxide (Gd₂O₃), 0.0815 g lanthanum oxide (La₂O₃), 1.0202 g boric acid (H₃BO₃) (over 10%), 0.0934 g terbium oxide (Tb₄O₇), and 0.0438g barium fluoride (BaF₂) (5%) are provided and positioned in an agate mortar to be completely grinded. The grinded matter is pre-sintered in a corundum crucible at 600 °C for 2 h, and then cooled to room temperature. The cooled pre-sintered matter is completely grinded once more. Finally, calcining at 1000 °C for 10 h in reducing gas of CO, cooling, removing to be grinded to obtain green fluorescent luminescent material of Ca₃Gd_{0.8}La_{0.1}Tb_{0.1} (BO₃)₃.

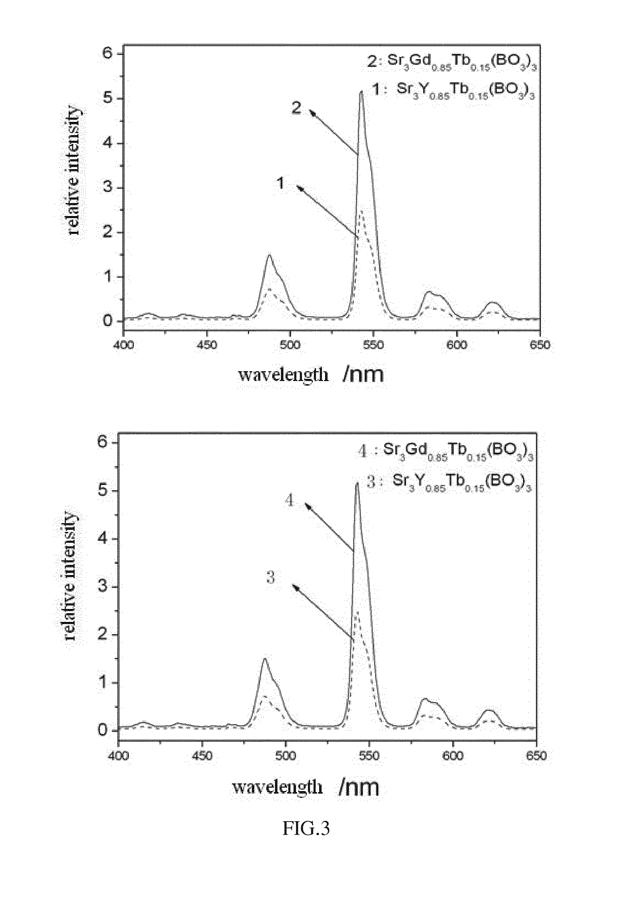

Gd³⁺ contained in the gadolinium borate M₃Gd(BO₃)₃ (M=Ca, Sr, Ba) of examples 1-6 is a framework structure of the M₃Gd(BO₃)₃, there is energy transition between the Gd³⁺ - Tb³⁺, which can improve the green light emitting intensity of the Tb³⁺. While in the comparison examples 1-3, there is no energy transition between the Ln³⁺-Tb³⁺ of borate MLn(BO₃)₃ (M=Ca, Sr, Ba; Ln=La, Y etc.). Compared to the M₃Gd(BO₃)₃ (M=Ca, Sr, Ba), when being excited by vacuum ultraviolet light, the MLn(BO₃)₃ (M=Ca, Sr, Ba; Ln=La, Y etc.) doped with Tb³⁺ has a lower luminescence intensity, showing as in Fig. 3. The curve 3 shows an emission spectrum of the luminescent material of Sr₃Y_{0.85}Tb_{0.15}(BO₃)₃ under an exciting wavelength of 172 nm, the curve 4 shows an emission spectrum of the luminescent material of Sr₃Gd_{0.85}Tb_{0.15}(BO₃)₃ under an exciting wavelength of 172 nm.

In the terbium doped gadolinium borate based green luminescent material as mentioned above, M₃Gd(BO₃)₃ is the matrix of the terbium doped gadolinium borate based green luminescent material, by the strong absorptions of the matrix M₃Gd₁₋ₓTbₓ(BO₃)₃ to the 150 nm - 175 nm vacuum ultraviolet light (VUV), and transition of the energy to the Gd³⁺ ions, for there is energy transition between the Gd^{3+ 6}P_{J} energy levels and the Tb³⁺, when the Tb³⁺ absorbs energy, by f-f transition radiation, emits green photons, the energy transition process between the Gd^{3+ 6}P_{J} energy levels and the Tb³⁺ enhances the green light emitting intensity of the Tb³⁺.

Compared to the existing technology, the luminescent material of the present invention has the following advantages : 1. Gd³⁺ contained in the gadolinium borate M₃Gd(BO₃)₃ (M=Ca, Sr, Ba) is a framework structure of the M₃Gd(BO₃)₃, there is energy transition between the Gd³⁺ - Tb³⁺, which can improve the green light emitting intensity of the Tb³⁺; 2. compared to the Mn²⁺ having long afterglow time, the Tb³⁺ has characteristic green light emitting (540-545 nm), and the spin coupling of the Tb³⁺ has a shielding affect to the spin forbidden of the Tb³⁺, thus the Tb³⁺ has shorter afterglow times, overcoming the hysteresis effect.

In the preparation method for preparing the terbium doped gadolinium borate based green luminescent material as mentioned above, by pre-sintering and calcining treatment, the luminescent material is obtained, which makes the preparation process be simple, low cost, and has broad applying prospect.

It is believed that the exemplary embodiment and its advantages will be understood from the foregoing description, and it will be apparent that various changes may be made thereto without departing from the scope of the disclosure or sacrificing all of its advantages, the examples hereinbefore described merely being preferred or exemplary embodiment of the disclosure.

## Claims

1. A preparation method for making a terbium doped gadolinium borate based green luminescent material, comprising the following steps:
step one, selecting the source compounds of alkaline earth metal ion, boric acid radical ion (BO₃²⁻), Gd³⁺, and Tb³⁺ by the stoichiometric ratio, wherein, the stoichiometric ratio is the molar ratio of the corresponding element in the formula of M₃Gd₁₋ₓTbₓ(BO₃)₃, and the source compound of BO₃²⁻ is over 10%, up to 30% by molar ratio, M is alkaline earth metal element, and x is in a range of 0.005-0.5;
step two, mixing the compounds with barium fluoride as a fluxing agent to get a mixture;
step three, pre-sintering the mixture and then cooling the mixture to get a pre-sintered matter;
step four, grinding the pre-sintered matter, calcining the grinded matter in reducing atmosphere and then cooling to get the terbium doped gadolinium borate based green luminescent material.

2. The preparation method for making a terbium doped gadolinium borate based green luminescent material according to claim 1, wherein the source compound of the alkaline earth metal element is at least one of alkaline earth oxide, alkaline earth hydroxide, alkaline earth nitrate, and alkaline earth carbonate; the source compound of the boric acid radical ion is at least one of boric acid and boric oxide; the source compound of Gd³⁺ is Gd³⁺ contained rare earth oxide or Gd³⁺ contained nitrate; the source compound of Tb³⁺ is Tb³⁺ contained rare earth oxide or Tb³⁺ contained nitrate.

3. The preparation method for making a terbium doped gadolinium borate based green luminescent material according to claim 1, wherein pre-sintering the mixture is carried out at the temperature in a range of 200 °C to 700 °C for 2 hours to 7 hours.

4. The preparation method for making a terbium doped gadolinium borate based green luminescent material according to claim 1, wherein calcining the grinded matter is carried out at the temperature in a range of 900 °C to 1100 °C for 3 hours to 24 hours.

5. The preparation method for making a terbium doped gadolinium borate based green luminescent material according to claim 1, wherein the source compound of BO₃²⁻ is over 10%, up to 20% by molar ratio.

6. The preparation method for making a terbium doped gadolinium borate based green luminescent material according to claim 1, wherein the reducing atmosphere is mixture gases of N₂ and H₂, H₂, or carbon monoxide.

## Patentansprüche

1. Herstellungsverfahren zur Herstellung eines auf Terbium-dotiertem Gadoliniumborat basierenden grün lumineszierenden Materials, das die folgenden Schritte umfasst:
Schritt 1, Auswählen der Ausgangsverbindungen aus Erdalkalimetallion, Borsäurerestion (BO₃²⁻), Gd³⁺ und Tb³⁺ durch das stöchiometrische Verhältnis, worin das stöchiometrische Verhältnis das Molverhältnis des entsprechenden Elements in der Formel M₃Gd₁₋ₓTbₓ(BO₃)₃ ist und die Ausgangsverbindung von BO₃²⁻ über 10 % bis zu 30 % des Molverhältnisses ausmacht, M Erdalkalimetallelement ist und x im Bereich on 0,005-0,5 liegt;
Schritt 2, Vermischen der Verbindungen mit Bariumfluorid als ein Flussmittel, um ein Gemisch zu erhalten;
Schritt 3, Vorsintern des Gemischs und dann Kühlen des Gemischs, um ein vorgesintertes Material zu erhalten;
Schritt 4, Mahlen des vorgesinterten Materials, Calcinieren des gemahlenen Materials in reduzierender Atmosphäre und dann Kühlen, um auf Terbium-dotiertem Gadoliniumborat basierendes grün lumineszierendes Material zu erhalten.

2. Herstellungsverfahren zur Herstellung eines auf Terbium-dotiertem Gadoliniumborat basierenden grün lumineszierenden Materials nach Anspruch 1, worin die Ausgangsverbindung des Erdalkalimetallelements zumindest eine aus Erdalkalioxid, Erdalkalihydroxid, Erdalkalinitrat und Erdalkalicarbonat ist; wobei die Ausgangsverbindung des Borsäurerestions zumindest eine aus Borsäure und Boroxid ist; wobei die Ausgangsverbindung von Gd³⁺ Gd³⁺-haltiges Seltenerdoxid oder Gd³⁺-haltiges Nitrat ist; wobei die Ausgangsverbindung von Tb³⁺ Tb³⁺-haltiges Seltenerdoxid oder Tb³⁺-haltiges Nitrat ist.

3. Herstellungsverfahren zur Herstellung eines auf Terbium-dotiertem Gadoliniumborat basierenden grün lumineszierenden Materials nach Anspruch 1, worin das Vorsintern des Gemischs 2 bis 7 Stunden lang bei der Temperatur in einem Bereich von 200 °C bis 700 °C durchgeführt wird.

4. Herstellungsverfahren zur Herstellung eines auf Terbium-dotiertem Gadoliniumborat basierenden grün lumineszierenden Materials nach Anspruch 1, worin das Calcinieren des gemahlenen Materials 3 bis 24 h lang bei der Temperatur in einem Bereich von 900 °C bis 1100 °C durchgeführt wird.

5. Herstellungsverfahren zur Herstellung eines auf Terbium-dotiertem Gadoliniumborat basierenden grün lumineszierenden Materials nach Anspruch 1, worin die Ausgangsverbindung von BO₃²⁻ über 10 % bis zu 20 % des Molverhältnisses ausmacht.

6. Herstellungsverfahren zur Herstellung eines auf Terbium-dotiertem Gadoliniumborat basierenden grün lumineszierenden Materials nach Anspruch 1, worin die reduzierende Atmosphäre ein Gasgemisch aus N₂ und H₂, H₂ oder Kohlenmonoxid ist.

## Revendications

1. Procédé de préparation pour produire un matériau luminescent vert à base de borate de gadolinium dopé au terbium, comprenant les étapes suivantes :
étape une, sélection des composés sources d'ions de métaux alcalino-terreux, d'ions de radicaux d'acide borique (BO₃²⁻), de Gd³⁺ et de Tb³⁺ par la proportion stoechiométrique, dans laquelle la proportion stoechiométrique est la proportion molaire de l'élément correspondant dans la formule M₃Gd₁₋ₓTbₓ(BO₃)₃, et la proportion molaire du composé source de BO₃²⁻ va de plus de 10 % jusqu'à 30 %, M est un métal alcalino-terreux élémentaire, et x est situé dans la plage allant de 0,005 à 0,5 ;
étape deux, mélange des composés avec du fluorure de baryum servant de fondant pour former un mélange ;
étape trois, pré-frittage du mélange puis refroidissement du mélange pour former une matière pré-frittée ;
étape quatre, broyage de la matière pré-frittée, calcination de la matière broyée dans une atmosphère réductrice puis refroidissement pour former le matériau luminescent vert à base de borate de gadolinium dopé au terbium.

2. Procédé de préparation pour produire un matériau luminescent vert à base de borate de gadolinium dopé au terbium selon la revendication 1, dans lequel le composé source du métal alcalino-terreux élémentaire est au moins l'un parmi un oxyde de métal alcalino-terreux, un hydroxyde de métal alcalino-terreux, un nitrate de métal alcalino-terreux, et un carbonate de métal alcalino-terreux ; le composé source de l'ion radicalaire d'oxyde borique est au moins l'un parmi l'acide borique et l'oxyde borique ; le composé source de Gd³⁺ est un oxyde des terres rares contenant Gd³⁺ ou un nitrate contenant Gd³⁺ ; le composé source de Tb³⁺ est un oxyde des terres rares contenant Tb³⁺ ou un nitrate contenant Tb³⁺.

3. Procédé de préparation pour produire un matériau luminescent vert à base de borate de gadolinium dopé au terbium selon la revendication 1, dans lequel le pré-frittage du mélange est mis en oeuvre à une température située dans la plage allant de 200°C à 700°C, pendant 2 heures à 7 heures.

4. Procédé de préparation pour produire un matériau luminescent vert à base de borate de gadolinium dopé au terbium selon la revendication 1, dans lequel la calcination de la matière broyée est mise en oeuvre à une température située dans la plage allant de 900°C à 1100°C, pendant 3 heures à 24 heures.

5. Procédé de préparation pour produire un matériau luminescent vert à base de borate de gadolinium dopé au terbium selon la revendication 1, dans lequel le composé source de BO₃²⁻ a une proportion molaire allant de plus de 10 % jusqu'à 20 %.

6. Procédé de préparation pour produire un matériau luminescent vert à base de borate de gadolinium dopé au terbium selon la revendication 1, dans lequel l'atmosphère réductrice est un mélange gazeux de N₂ et de H₂, du H₂, ou du monoxyde de carbone.
